# EUROPEAN PATENT SPECIFICATION

(11) **EP 2 439 647 B1**
(45) Date of publication and mention of the grant of the patent: **23.01.2019**
(21) Application number: 09845674.2
(22) Date of filing: 30.07.2009
(51) Int. Cl.: G06F 9/445, G06F 9/44

(54) **IMPLEMENT METHOD, OPERATION METHOD, AND SYSTEM WITHOUT INSTALLING DATA CARD DRIVER**
IMPLEMENTIERUNGSVERFAHREN, BETRIEBSVERFAHREN UND SYSTEM OHNE INSTALLATION EINES DATENKARTENTREIBERS
PROCÉDÉ DE MISE EN OEUVRE, PROCÉDÉ D'EXPLOITATION ET SYSTÈME SANS INSTALLATION DE PILOTE POUR CARTE DE DONNÉES

(30) Priority: 12.06.2009 CN 200910203770
(43) Date of publication of application: 11.04.2012
(73) Proprietor: ZTE Corporation, Shenzhen, Guangdong 518057 (CN)
(72) Inventor: ZHAO, Ming, Shenzhen Guangdong 518057 (CN); CHEN, Bing, Shenzhen Guangdong 518057 (CN); ZUO, Zhao, Shenzhen Guangdong 518057 (CN); JIN, Junhong, Shenzhen Guangdong 518057 (CN)
(74) Representative: Manitz Finsterwald Patentanwälte PartmbB
(86) International application number: PCT/CN2009/000854
(87) International publication number: WO 2010/142065

(56) References cited:
- EP-A2- 2 107 463
- CN-C- 100 382 065
- CN-Y- 201 114 141
- GB-B- 2 434 228
- US-B1- 6 311 228
- UNKNOWN: "Review of Franklin CDU680 aka Sprint S680 EVDO USB Modem", INTERNET CITATION, 20 September 2007 (2007-09-20), pages 1-14, XP002541936, Retrieved from the Internet: URL:http://www.evdoinfo.com/content/view/2 106/63/ [retrieved on 2009-08-18]
- WIKIPEDIA ORG: "Potable TOR", INTERNET CITATION, 26 March 2008 (2008-03-26), pages 1-2, XP002541704, Retrieved from the Internet: URL:http://en.wikipedia.org/w/index.php?ti tle=Portable_Tor&oldid=200960394 [retrieved on 2009-08-17]

## Description

### Technical Field

The present invention relates to the communication field, and particularly, to an implementation method and a system of a data card. The features of the preamble of the independent claims are known from GB 2 434 228 B. "Review of Franklin CDU680 aka Sprint S680 EVDO USB Modern", pages 1-14, XP002541936, and "Portable TOR", pages 1-2, XP002541704 disclose related art.

### Background of the Related Art

At present, with the rapid development of the 3rd Generation (3G) mobile communication technology network, users not only have higher requirements for the traditional voice service of the mobile network, but also pay more and more attentions to wireless data services of the mobile network. The application of the 3G data card is wider and wider thereupon.

The existing method for using the data card is generally: firstly a user installing the driver program and user interface (UI) software of the data card on the computer, and then being able to use the user card. This method has following drawbacks:
firstly, the operation is troublesome and consumes much time and energy. The user completely installing all the drivers and UI software requires 3-5 minutes at least, and when the user uses the data card on another computer, the driver program and UI software are also required to reinstall, and the usage is rather troublesome;
secondly, the installation process needs that the user has a certain authority. Since the installation of the driver program needs that the user has the administrator authority, a common user is unable to install the driver program and UI software in an environment requiring the virtual private network (VPN) authentication such as an enterprise network, and is either unable to use the data card;
finally, since the different software environments of computers possibly cause that the data card is unable to be used. The software environment of each computer are quite different, and some system level software, such as an antivirus software and a monitoring software and so on, will stop the installation of the related driver and UI software, which causes the failure of the installation process of the data card software and affects the usage of the user.

### Summary of the Invention

Regarding to above technical problems, the present invention proposes an implementation method and a system of a data card for avoiding driver installation as defined in the independent claims, which is able to conveniently operate the data card without installing the driver program and UI software, and avoids the problems of the troublesome process of installing the driver program and UI software of the data card, and the failure caused by user being required to have a certain authority and installation being easily affected by other software, and so on.

In order to solve the above technical problems, the present invention proposes an implementation method of a data card driver free installation, comprises:
device side software of a data card enumerating said data card as a compound device, and said compound device having at least one human interface device (HID) function interface of a HID type;
said device side software of the data card mapping all of other function interface data of said data card into said HID function interface, and taking said HID function interface as a channel interacting data with a PC side; and
developing green software and building said green software in a storage area of said data card; wherein said green software is graphical interface software free installation of a user layer, said green software is automatically obtained and run by an operating system of a computer after inserting said data card into the computer, to provide an operating platform for a user controlling said data card.

Further, the above implementation method can further have the following characteristic:
the device side software of said data card encapsulating the other function interface data as HID report format data, so as to implement mapping all of the other function interface data into said HID function interface.

Further, the above implementation method can further have the following characteristic:
the user controlling said data card to perform dial-up Internet connection through said green software, and directly invoke a browser on the computer to access the Internet.

Further, the above implementation method can further have the following characteristic:
the user further configuring a function of accessing the Internet through said green software.

In order to solve the above technical problems, the present invention further proposes a system of a data card driver free installation based on the above implementation method, comprising a PC layer and a device layer of the data card, wherein:
said PC layer obtains said green software from the storage area of said data card and automatically runs said green software after identifying that said data card is inserted; receives and identifies an user operation through said green software, and sends a control instruction of the user to the device layer of said data card through a HID user interface brought by a operating system self; and
said device layer of the data card receives the control instruction of the user through said HID function interface, analyzes said control instruction, and executes a data card operation according to the analyzed control instruction.

Further, the above system can further have the following characteristic:
said device layer of the data card is configured to execute a dial-up Internet connection operation after analyzing that said control instruction is a control instruction of dial-up Internet connection, obtain data from a network side, and send the obtained network data to the PC layer by the HID function interface;
said PC layer is configured to open a browser after identifying an operation of user invoking a PC browser, and provide a required webpage for the user according to the network data sent from said device layer of the data card.

Further, the above system can further have the following characteristic:
said PC layer comprises user interface (UI) software, a network core layer and a HID user interface, wherein:
   said UI software is configured to obtain said green software from the storage area of said data card and automatically run said green software after said PC layer identifying that said data card is inserted; and said UI software is used for receiving and identifying the user operation, sending the control instruction of the user to said network core layer, opening the browser after identifying the operation of the user invoking the PC browser, and providing the required webpage for the user according to the network data sent from said device layer of the data card;
   said network core layer is configured to encapsulate the control instruction sent from said UI software and then provide to the HID user interface; and encapsulate data sent from said HID user interface as a network protocol packet format, and provide upwards to said UI software;
   said HID user interface is configured to send the control instruction of the user to said device layer of the data card, and send the network data sent from said device layer of the data card to said network core layer;
said device layer of the data card comprises a HID instruction analysis module, a DHCP server, a PPP protocol module responsible for a specific dial-up service and hardware for supporting software running, wherein:
   said HID instruction analysis module is configured to analyze the control instruction of the PC layer sent through the HID user interface, and transmit the network data to said HID user interface of the PC layer after encapsulating the network data transmitted from the DHCP server as a HID packet format;
   said DHCP server is configured to send the network data sent from said PPP protocol module to the HID instruction analysis module, and transmit the control instruction analyzed by said HID instruction analysis module down to said PPP protocol module;
   said PPP protocol module is configured to perform dial-up Internet connection according to a control instruction of dial-up Internet connection of the user, and obtain the network data and then send to said DHCP server.

In order to solve the above technical problems, the present invention further proposes an operation method for controlling said data card by using the above system, comprising:
inserting said data card into a PC;
an operating system of the PC automatically running said green software built in said data card;
the user controlling said data card through said green software, a computer sending the control instruction of the user to said data card through said HID user interface, and the data card receiving said control instruction through said HID function interface, and performing data processing according to said control instruction.

Further, the above operation method can further have the following characteristic:
the user performs dial-up Internet connection through said green software;
the PC sends a control instruction of the dial-up Internet connection to said data card through said HID user interface;
said data card performs the dial-up Internet connection according to the control instruction of dial-up Internet connection, and obtains network data and then sends to said PC;
the user invokes a browser of the computer through said green software;
said PC opens the browser, and provides a webpage for the user according to the received network data.

Further, the above operation method can further have the following characteristic:
the user further configures a function of accessing the Internet through said green software.

The implementation method, operation method and system of a data card driver free installation proposed by the present invention are able to efficiently solve problems that user installing the data card driver program and UI software is troublesome and is limited by the authority, so that the user can freely use the data card in different computer environments, and the use process will not leave any trace in the target computer environment.

### Brief Description of Drawings

FIG. 1 is a flow chart of an implementation method of a data card driver free installation according to an embodiment of the present invention;
FIG. 2 is a block diagram of a system of a data card driver free installation according to an embodiment of the present invention;
FIG. 3 is a flow chart of a method for implementing operating the data card by using the system as shown in FIG. 2 according to an embodiment of the present invention.

### Preferred Embodiments of the Present Invention

Below the present invention will be illustrated with reference to the accompanying drawings and specific embodiments in detail.

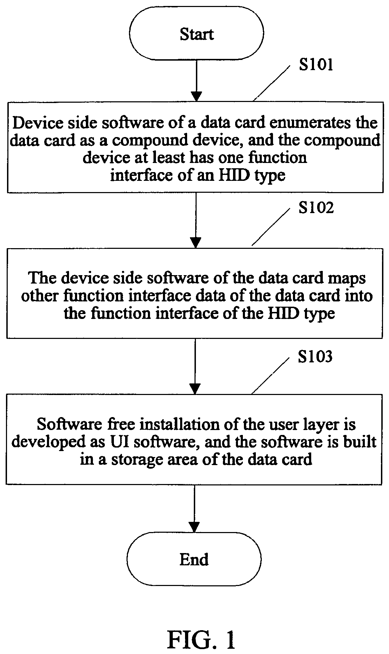

With reference to FIG. 1, FIG.1 shows the implementation method of the data card driver free installation, and the implementation method comprises following steps:
step S101, the device side software (firmware) of a data card enumerates the data card as a compound device, and the compound device at least has one function interface of a human interface device (HID) type;
the compound device is generally a combination of device types such as an optical disk (CDROM) type device, a large capacity storage type device (MASS-STORAGE), and an HID type device, that is, the combination of the plurality of above types of devices will be displayed on the computer after inserting the data card into the computer;
step S102, the device side software of the data card maps the other function interface data of the data card, such as the modulator and demodulator (Modem) data and control (AT) data and so on, into the function interface of the HID type;
the device side software of the data card can encapsulate the modem data and the AT data and so on as a report format data of the HID type, thereby implementing mapping these data into the function interface of the HID type;
since the WINDOWS system provides a default driver program for the device of the HID type, the data card side can take the function interface of the HID type as a channel of interacting data with the PC side so as to establish the communication with the PC;
step S103, software free installation of the user layer is developed as graphical user interface (UI) software, and the software is built in a storage area of the data card.

Below the software is called as green software for convenient description. The green software provides an operating platform of user operating the data card, allows that the user can directly invoke a browser on the computer to access the Internet, and allows the user to perform various controls on the data card, such as configuring a PIN code, configuring network parameters, configuring a PUK code, and even accessing data and so on.

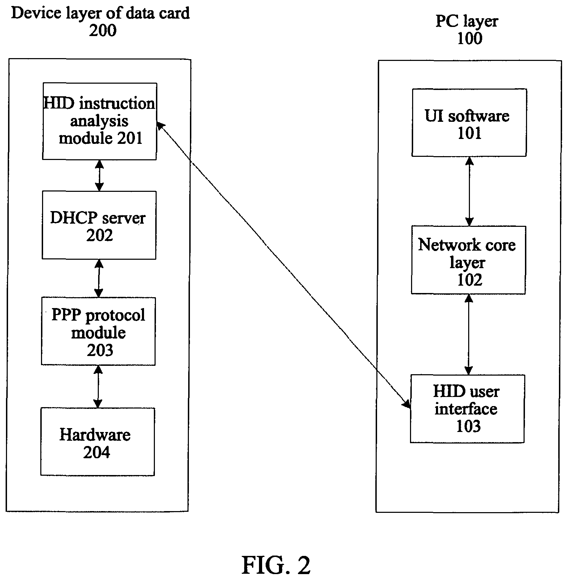

With reference to FIG. 2, FIG. 2 shows the system for implementing the data card driver free installation according to the embodiment of the present invention, and the system comprises a computer (PC) layer and a device layer of the data card.

The PC layer 100 is used for receiving and sending board side data in the PC operating system, and comprises: UI software 101, a network core layer 102 and a HID user interface (USER API) 103, wherein:
the UI software 101 is the green software in the data card mentioned above which is automatically obtained and run by the PC layer 100 after inserting the data card into the PC. The UI software 101 is used for using the application program, such as the IE, firefox, and chrome and so on, to load the Internet Protocol (IP) packets for the user surfing the Internet, after receiving the IP packets transmitted from the Network core 102; and receiving and identifying user operations, and sending control instructions of the user to the Network core 102. The control instructions can include: configuring the PIN code, configuring the network parameters, configuring the PUK code and even accessing data, and so on;
the Network core 102 is used for encapsulating the data transmitted from the HID USER API 103 as a standard IP packet format, and providing upwards to the UI software 101; at the same time, providing to the HID USER API 103 the control instructions of the user transmitted from the UI software 101 after encapsulating;
the HID USER API 103 is a direct link of the interacting between the PC layer 100 and the device layer (DEVICE) 200, which is responsible for sending the control instruction of the PC layer to the DEVICE layer, and receiving the data of the DEVICE layer to the PC layer at the same time.

The DEVICE layer 200 is used for receiving the network data transmitted from the wireless network and uploading the data to the PC layer, and analyzing the control instruction sent from the PC layer. The DEVICE layer 200 comprises an HID instruction analysis module 201, a DHCP server (SERVER) 202, a PPP protocol module 203 and a HardWare 204, wherein:
the HID instruction analysis module 201 is used for analyzing the control data of the PC layer transmitted from the HID USER API 103, and encapsulating the data transmitted from the DHCP server 202 into the format of the HID packet and then uploading to the HID USER API 103;
the DHCP server 202 is used for sending the network data transmitted from the PPP protocol module 203 to the HID instruction analysis module 201, and downloading the data analyzed by the HID instruction analysis module 201 to the PPP protocol module 203;
the PPP protocol module 203 is responsible for a particular dialing service and obtaining the network data;
the HardWare 204 is the physical hardware of the DEVICE200 layer, and supports the software running of the DEVICE200 layer.

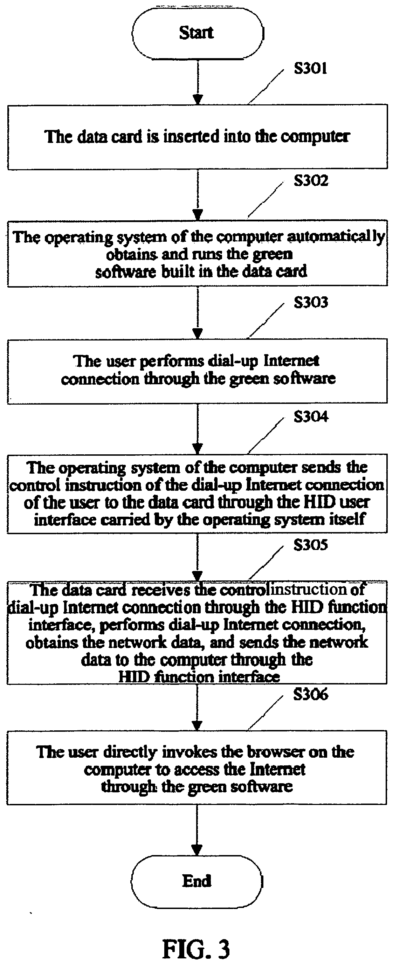

With reference to FIG 3, FIG. 3 shows the method for operating the data card by using the system shown in FIG 2, and the method comprises following steps:
step S301: the data card is inserted into the computer;
a green software is built in the data card, and the software is generally placed in the storage area of the data card, for example the optical disk or T card. The green software provides an operating platform for the user operating the data card, allows the user to directly invoke the browser on the computer to surf the Internet and to perform various controls on the data card, such as configuring the PIN code, configuring the network parameters, configuring the PUK code, and even accessing data, and so on.

Step S302, the operating system of the computer automatically obtains and runs the green software built in the data card;
step S303, the user performs dial-up Internet connection through the green software;
certainly, the user also can implement the control of the data card through the green software, for example configuring the function of accessing the Internet, such as configuring the PIN code, configuring the network parameters, and configuring the PUK code and so on. If such configurations have been configured, for example the PIN code has been configured, then the green software will prompt the user to input the PIN code when the user performs dial-up Internet connection, and if the verification is passed, the step S304 is carried out then, thereby being able to efficiently increase the security of the system.

Step S304, the operating system of the computer sends the control instruction of user dial-up Internet connection to the data card through the HID user interface brought by the operating system itself;
step S305, the data card receives the control instruction of the dial-up Internet connection through the HID function interface, performs the dial-up Internet connection, obtains the network data, and sends the network data to the computer through the HID function interface;
the HID instruction analysis module of the device side of the data card sends the control instructions to the AT function interface after receiving and analyzing the control instructions sent from the computer side, and sends the network data to the Modem function interface after receiving and analyzing the network data sent from the network side.

Step S306, the user directly invokes the browser on the computer to access the Internet through the green software.

Certainly, in another embodiment, if the green software also supports the user access operation, then the user also can sends the access control instruction through the green software, and sends the access control instruction to the data card side through the HID user interface of the PC side, thereby controlling the access operation of the data card.

The core concept of the present invention skillfully takes use of the default driver program provided by the operating system of the computer for the device of the HID type, takes the HID function interface brought by the operating system itself as the channel interacting with the data card side to interact data with the data card, and provides a convenient platform for the user operating the data card through the green software. Certainly, the present invention can also have other various embodiments, various corresponding modifications and variations can be made according to the present invention as defined in the claims by those having ordinary skills in the art without departing from the essentiality of the present invention.

### Industrial Applicability

The implementation method, operation method and system of a data card driver free installation proposed by the present invention are able to efficiently solve problems that user installing the data card driver program and UI software is troublesome and is limited by the authority, so that the user can freely use the data card in different computer environments, and the use process will not leave any trace in the target computer environment.

## Claims

1. An implementation method for avoiding installing a driver of a data card, comprising:
device side software of a data card enumerating (S101) said data card as a compound device, and said compound device having at least one human interface device, HID, function interface of a HID type;
said device side software of the data card mapping (S102) all of other function interface data of said data card into said HID function interface, and taking said HID function interface as a channel interacting data with a PC side; **characterised by**:
providing (S103) green software and building said green software in a storage area of said data card, wherein said green software is free-of-installation graphical interface software and is automatically obtained and run by an operating system of a computer after inserting said data card into the computer, to provide an operating platform for a user controlling said data card,
wherein the user controlling said data card comprises:receiving and identifying a user operation through said green software, and sending a control instruction of the user to the device side software of said data card through the HID user interface brought by the operating system of the computer;
said device side software of the data card receiving a control instruction of the user through said HID function interface, analysing said control instruction, and executing a data card operation according to the analysed control instruction;
said device side software of the data card executing a dial-up Internet connection operation after analysing that said control instruction is a control instruction of dial-up Internet connection, obtaining data from a network side, and sending the obtained network data to the computer by the HID function interface; and
opening a browser after identifying an operation of the user invoking a PC browser, and providing a required webpage for the user according to the network data sent from said device side software of the data card, wherein the step of mapping (S102) all of other function interface data of said data card into said HID function interface comprises:
the device side software of said data card encapsulating the other function interface data as HID report format data, so as to implement mapping all of the other function interface data into said HID function interface.

2. The implementation method as claimed in claim 1, wherein the user controlling said data card further comprises:
the user further configuring a function of accessing the Internet through said green software.

3. A system for avoiding installing a driver of a data card adapted to perform the method of claim 1 comprising a PC layer (100) and a device layer of the data card, wherein
said PC layer (100) is configured to obtain said green software from the storage area of said data card and automatically run said green software after identifying that said data card is inserted; to receive and identify an user operation through said green software, and send a control instruction of the user to the device layer (200) of said data card through an HID user interface (103) brought by an operating system self; and
said device layer (200) of the data card is configured to receive the control instruction of the user through said HID function interface (103), analyze said control instruction, and execute a data card operation according to the analyzed control instruction, wherein:
said device layer (200) of the data card is configured to execute a dial-up Internet connection operation after analyzing that said control instruction is a control instruction of dial-up Internet connection, obtain data from a network side, and send the obtained network data to the PC layer (100) by the HID function interface;
said PC layer (100) is configured to open a browser after identifying an operation of user invoking a PC browser, and provide a required webpage for the user according to the network data sent from said device layer (200) of the data card.

4. The system as claimed in claim 3, wherein:
said PC layer (100) comprises user interface (UI) software (101), a network core layer (102) and an HID user interface (103), wherein
said UI software (101) is configured to obtain said green software from the storage area of said data card and automatically run said green software after said PC layer (100) identifying that said data card is inserted; and said UI software (101) is configured to receive and identify the user operation, send the control instruction of the user to said network core layer, open the browser after identifying the operation of the user invoking the PC browser, and provide the required webpage for the user according to the network data sent from said device layer (200) of the data card;
said network core layer (102) is configured to encapsulate the control instruction sent from said UI software (101) and then provide to the HID user interface (103); and encapsulate data sent from said HID user interface (103) as a network protocol packet format, and provide upwards to said UI software (101);
said HID user interface (103) is configured to send the control instruction of the user to said device layer (200) of the data card, and send the network data sent from said device layer (200) of the data card to said network core layer (102);
said device layer (200) of the data card comprises an HID instruction analysis module (201), a DHCP server (202), a PPP protocol module (203) responsible for a specific dial-up service and hardware (204) for supporting software running, wherein
said HID instruction analysis module (201) is configured to analyze the control instruction of the PC layer (100) sent through the HID user interface (103), and transmit the network data to said HID user interface (103) of the PC layer (100) after encapsulating the network data transmitted from the DHCP server (202) as a HID packet format;
said DHCP server (202) is configured to send the network data sent from said PPP protocol module (203) to the HID instruction analysis module (201), and transmit the control instruction analyzed by said HID instruction analysis module (201) down to said PPP protocol module (203);
said PPP protocol module (203) is configured to perform dial-up Internet connection according to a control instruction of dial-up Internet connection of the user, and obtain the network data and then send to said DHCP server (202).

## Patentansprüche

1. Implementierungsverfahren zum Vermeiden des Installierens eines Treibers einer Datenkarte, das umfasst, dass:
eine geräteseitige Software einer Datenkarte die Datenkarte als Verbundgerät spezifiziert (S101) und das Verbundgerät mindestens eine Human Interface Device Funktionsschnittstelle, HID-Funktionsschnittstelle, eines HID-Typs aufweist;
die geräteseitige Software der Datenkarte alle Daten von anderen Funktionsschnittstellen der Datenkarte in die HID-Funktionsschnittstelle abbildet und die HID-Funktionsschnittstelle als einen Kanal verwendet, der Daten mit einer PC-Seite kommuniziert;
**dadurch gekennzeichnet, dass**
eine grüne Software bereitgestellt wird (S103) und die grüne Software in einem Speicherbereich der Datenkarte aufgebaut wird, wobei die grüne Software eine installationsfreie Software mit einer graphischen Schnittstelle ist und nach dem Einführen der Datenkarte in den Computer von einem Betriebssystem des Computers automatisch beschafft und laufen gelassen wird, um eine Arbeitsplattform für einen Nutzer bereitzustellen, der die Datenkarte steuert, wobei das Merkmal, dass der Nutzer die Datenkarte steuert, umfasst, dass:
eine Nutzeroperation durch die grüne Software empfangen und erkannt wird und eine Steuerungsanweisung des Nutzers an die geräteseitige Software der Datenkarte durch die HID-Nutzerschnittstelle gesendet wird, die von dem Betriebssystem des Computers beigestellt wird;
die geräteseitige Software der Datenkarte eine Steuerungsanweisung des Nutzers durch die HID-Funktionsschnittstelle empfängt, die Steuerungsanweisung analysiert und eine Operation der Datenkarte in Übereinstimung mit der analysierten Steuerungsanweisung ausführt;
die geräteseitige Software der Datenkarte eine Einwahloperation für eine Internetverbindung ausführt, nachdem analysiert wurde, dass die Steuerungsanweisung eine Steuerungsanweisung für eine Einwahl-Internetverbindung ist, Daten von einer Netzwerkseite beschafft und die beschafften Netzwerkdaten durch die HID-Funktionsschnittstelle an den Computer sendet; und
nachdem eine Operation, dass der Nutzer einen PC-Browser aufruft, erkannt wurde, ein Browser geöffnet wird und eine angeforderte Webseite für den Nutzer in Übereinstimmung mit den Netzwerkdaten bereitgestellt wird, die von der geräteseitigen Software der Datenkarte gesendet wurden,
wobei der Schritt des Abbildens (S102) aller Daten von anderen Funktionsschnittstellen der Datenkarte in die HID-Funktionsschnittstelle umfasst, dass:
die geräteseitige Software der Datenkarte die Daten der anderen Funktionsschnittstellen als Daten im HID-Reportformat kapselt, um das Abbilden aller Daten von anderen Funktionsschnittstellen in die HID-Funktionsschnittstelle zu implementieren.

2. Implementierungsverfahren nach Anspruch 1,
wobei das Merkmal, dass der Nutzer die Datenkarte steuert, ferner umfasst, dass:
der Nutzer ferner eine Funktion zum Zugreifen auf das Internet durch die grüne Software konfiguriert.

3. System zum Vermeiden des Installierens eines Treibers einer Datenkarte, das angepasst ist, um das Verfahren nach Anspruch 1 auszuführen, das eine PC-Schicht (100) und eine Geräteschicht der Datenkarte umfasst, wobei
die PC-Schicht (100) ausgestaltet ist, um die grüne Software aus dem Speicherbereich der Datenkarte zu beschaffen und um die grüne Software automatisch ablaufen zu lassen, nachdem erkannt wurde, dass die Datenkarte eingeführt ist; um eine Nutzeroperation durch die grüne Software zu empfangen und zu erkennen, und um eine Steuerungsanweisung des Nutzers an die Geräteschicht (200) der Datenkarte durch eine HID-Nutzerschnittstelle (103) zu senden, die von einem Betriebssystem selbst beigestellt wird; und
die Geräteschicht (200) der Datenkarte ausgestaltet ist, um die Steuerungsanweisung des Nutzers durch die HID-Funktionsschnittstelle (103) zu empfangen, um die Steuerungsanweisung zu analysieren, und um eine Datenkartenoperation in Übereinstimmung mit der analysierten Steuerungsanweisung auszuführen, wobei:
die Geräteschicht (200) der Datenkarte ausgestaltet ist, um eine Einwahl-Internetverbindungsoperation auszuführen, nachdem analysiert wurde, dass die Steuerungsanweisung eine Steuerungsanweisung einer Einwahl-Internetverbindung ist, um Daten von einer Netzwerkseite zu beschaffen und um die beschafften Netzwerkdaten durch die HID-Funktionsschnittstelle an die PC-Schicht (100) zu senden;
die PC-Schicht (100) ausgestaltet ist, um einen Browser zu öffnen, nachdem eine Operation des Nutzers als Aufrufen eines PC-Browsers erkannt wurde, und um eine angeforderte Webseite für den Nutzer in Übereinstimmung mit den Netzwerkdaten bereitzustellen, die von der Geräteschicht (200) der Datenkarte gesendet wurden.

4. System nach Anspruch 3, wobei:
die PC-Schicht (100) Nutzerschnittstellensoftware (UI-Software) (101), eine Netzwerkkernschicht (102) und eine HID-Nutzerschnittstelle (103) umfasst, wobei
die UI-Software (101) ausgestaltet ist, um die grüne Software aus dem Speicherbereich der Datenkarte zu beschaffen und um die grüne Software automatisch ablaufen zu lassen, nachdem die PC-Schicht (100) erkannt hat, dass die Datenkarte eingeführt ist; und die UI-Software (101) ausgestaltet ist, um die Nutzeroperation zu empfangen und zu erkennen, um die Steuerungsanweisung des Nutzers an die Netzwerkkernschicht zu senden, um den Browser zu öffnen, nachdem die Operation des Nutzers als Aufrufen des PC-Browsers erkannt wurde, und um die angeforderte Webseite für den Nutzer in Übereinstimmung mit den Netzwerkdaten bereitzustellen, die von der Geräteschicht (200) der Datenkarte gesendet wurden;
die Netzwerkkernschicht (102) ausgestaltet ist, um die Steuerungsanweisung, die von der UI-Software (101) gesendet wurde, zu kapseln, und um sie dann an die HID-Nutzerschnittstelle (103) zu liefern; und um Daten, die von der HID-Nutzerschnittstelle (103) gesendet werden, als ein Netzwerkprotokoll-Paketformat zu kapseln und sie nach oben für die Ul-Software (101) bereitzustellen;
die HID-Nutzerschnittstelle (103) ausgestaltet ist, um die Steuerungsanweisung des Nutzers an die Geräteschicht (200) der Datenkarte zu senden und um die Netzwerkdaten, die von der Geräteschicht (200) der Datenkarte gesendet wurden, an die Netzwerkkernschicht (102) zu senden;
die Geräteschicht (200) der Datenkarte ein HID-Anweisungsanalysemodul (201), einen DHCP-Server (202), ein PPP-Protokollmodul (203), das für einen speziellen Einwahldienst verantwortlich ist, und Hardware (204) zum Unterstützen des Laufenlassens von Software umfasst, wobei
das HID-Anweisungsanalysemodul (201) ausgestaltet ist, um die Steuerungsanweisung der PC-Schicht (100) zu analysieren, die durch die HID-Nutzerschnittstelle (103) gesendet wurde, und um die Netzwerkdaten an die HID-Nutzerschnittstelle (103) der PC-Schicht (100) nach dem Kapsein der Netzwerkdaten, die von dem DHCP-Server (202) übertragen wurden, als ein HID-Paketformat zu übertragen;
der DHCP-Server (202) ausgestaltet ist, um die Netzwerkdaten, die von dem PPP-Protokollmodul (203) gesendet wurden, an das HID-Anweisungsanalysemodul (201) zu senden, und um die Steuerungsanweisung, die von dem HID-Anweisungsanalysemodul (201) analysiert wurde, hinunter an das PPP-Protokollmodul (203) zu übertragen;
das PPP-Protokollmodul (203) ausgestaltet ist, um eine Einwahl-Internetverbindung in Übereinstimmung mit einer Steuerungsanweisung für eine Einwahl-Internetverbindung des Nutzers auszuführen, und um die Netzwerkdaten zu beschaffen und sie dann an den DHCP-Server (202) zu senden.

## Revendications

1. Procédé de mise en oeuvre pour éviter d'installer un pilote d'une carte de données, consistant en ce que :
un logiciel côté périphérique d'une carte de données énumère (S101) ladite carte de données en tant que périphérique composite, et ledit périphérique composite présente au moins une interface fonctionnelle de type HID (HID, human interface device = périphérique d'interface humaine) ;
ledit logiciel côté périphérique de la carte de données mappe (S102) toutes les autres données d'interface fonctionnelle de ladite carte de données dans ladite interface fonctionnelle HID et prend ladite interface fonctionnelle HID comme canal d'interaction de données avec un côté PC ; **caractérisé en ce qu'**il consiste à :
fournir (S103) un logiciel "vert" (ou "green software") et intégrer ledit logiciel vert dans une zone de stockage de ladite carte de données, ledit logiciel vert étant un logiciel d'interface graphique sans installation qui est automatiquement obtenu et exécuté par un système d'exploitation d'un ordinateur après insertion de ladite carte de données dans l'ordinateur, pour fournir une plate-forme d'exploitation pour un utilisateur commandant ladite carte de données,
l'étape dans laquelle l'utilisateur commande ladite carte de données consistant à :
recevoir et identifier une opération de l'utilisateur via ledit logiciel vert et envoyer une instruction de commande de l'utilisateur au logiciel côté périphérique de ladite carte de données via l'interface utilisateur HID fournie par le système d'exploitation de l'ordinateur ;
ledit logiciel côté périphérique de la carte de données recevant une instruction de commande de l'utilisateur via ladite interface fonctionnelle HID, analysant ladite instruction de commande et exécutant une opération de carte de données en fonction de l'instruction de commande analysée ;
ledit logiciel côté périphérique de la carte de données exécutant une opération de connexion à Internet par ligne commutée après avoir analysé que ladite instruction de commande est une instruction de commande d'une connexion à Internet par ligne commutée, obtenant des données d'un côté réseau et envoyant les données de réseau obtenues à l'ordinateur par l'interface fonctionnelle HID ; et
ouvrir un navigateur après avoir identifié une opération de l'utilisateur invoquant un navigateur de PC et fournir une page Web requise pour l'utilisateur en fonction des données de réseau envoyées par ledit logiciel côté périphérique de la carte de données,
l'étape consistant à mapper (S102) toutes les autres données d'interface fonctionnelle de ladite carte de données dans ladite interface fonctionnelle HID consistant **en ce que** :
le logiciel côté périphérique de ladite carte de données encapsule les autres données d'interface fonctionnelle en tant que données de format de rapport HID afin de mettre en oeuvre le mappage de toutes les autres données d'interface fonctionnelle dans ladite interface fonctionnelle HID.

2. Procédé de mise en oeuvre selon la revendication 1, dans lequel l'étape dans laquelle l'utilisateur commande ladite carte de données consiste en outre en ce que :
l'utilisateur configure en outre une fonction d'accès à Internet via ledit logiciel vert.

3. Système pour éviter l'installation d'un pilote d'une carte de données adapté à exécuter le procédé de la revendication 1, comprenant une couche de PC (100) et une couche de périphérique de la carte de données, dans lequel
ladite couche de PC (100) est configurée pour obtenir ledit logiciel vert à partir de la zone de stockage de ladite carte de données et exécuter automatiquement ledit logiciel vert après avoir identifié que ladite carte de données est insérée ; recevoir et identifier une opération de l'utilisateur via ledit logiciel vert, et envoyer une instruction de commande de l'utilisateur à la couche de périphérique (200) de ladite carte de données via une interface utilisateur HID (103) fournie par un système d'exploitation lui-même; et
ladite couche de périphérique (200) de la carte de données est configurée pour recevoir l'instruction de commande de l'utilisateur via ladite interface fonctionnelle HID (103), analyser ladite instruction de commande et exécuter une opération de carte de données en fonction de l'instruction de commande analysée,
ladite couche de périphérique (200) de la carte de données est configurée pour exécuter une opération de connexion à Internet par ligne commutée après avoir analysé que ladite instruction de commande est une instruction de commande de connexion à Internet par ligne commutée, obtenir des données d'un côté réseau et envoyer les données de réseau obtenues à la couche de PC (100) par l'interface fonctionnelle HID ;
ladite couche de PC (100) est configurée pour ouvrir un navigateur après avoir identifié une opération de l'utilisateur invoquant un navigateur de PC et fournir une page Web requise pour l'utilisateur en fonction des données de réseau envoyées par ladite couche de périphérique (200) de la carte de données.

4. Système selon la revendication 3, dans lequel :
ladite couche de PC (100) comprend un logiciel d'interface utilisateur (UI) (101), une couche de coeur de réseau (102) et une interface utilisateur HID (103), dans lequel
ledit logiciel d'interface utilisateur (101) est configuré pour obtenir ledit logiciel vert à partir de la zone de stockage de ladite carte de données et exécuter automatiquement ledit logiciel vert après que ladite couche de PC (100) a identifié que ladite carte de données est insérée ; et ledit logiciel d'interface utilisateur (101) est configuré pour recevoir et identifier l'opération de l'utilisateur, envoyer l'instruction de commande de l'utilisateur à ladite couche de coeur de réseau, ouvrir le navigateur après avoir identifié l'opération de l'utilisateur invoquant le navigateur de PC et fournir la page Web requise pour l'utilisateur en fonction des données de réseau envoyées par ladite couche de périphérique (200) de la carte de données ;
ladite couche de coeur de réseau (102) est configurée pour encapsuler l'instruction de commande envoyée par ledit logiciel d'interface utilisateur (101) et la fournir ensuite à l'interface utilisateur HID (103) ; et encapsuler les données envoyées à partir de ladite interface utilisateur HID (103) en tant que format de paquet de protocole de réseau, et les fournir vers le haut audit logiciel d'interface utilisateur (101) ;
ladite interface utilisateur HID (103) est configurée pour envoyer l'instruction de commande de l'utilisateur à ladite couche de périphérique (200) de la carte de données et envoyer les données de réseau envoyées par ladite couche de périphérique (200) de la carte de données à ladite couche de coeur de réseau (102) ;
ladite couche de périphérique (200) de la carte de données comprend un module d'analyse d'instructions HID (201), un serveur DHCP (202), un module de protocole PPP (203) responsable d'un service par ligne commutée spécifique et du matériel (204) pour prendre en charge l'exécution du logiciel, dans lequel
ledit module d'analyse d'instructions HID (201) est configuré pour analyser l'instruction de commande de la couche de PC (100) envoyée via l'interface utilisateur HID (103) et transmettre les données de réseau à ladite interface utilisateur HID (103) de la couche de PC (100) après avoir encapsulé les données de réseau transmises par le serveur DHCP (202) en tant que format de paquet HID ;
ledit serveur DHCP (202) est configuré pour envoyer les données de réseau envoyées par ledit module de protocole PPP (203) au module d'analyse d'instructions HID (201) et transmettre l'instruction de commande analysée par ledit module d'analyse d'instructions HID (201) audit module de protocole PPP (203) ;
ledit module de protocole PPP (203) est configuré pour effectuer une connexion à Internet par ligne commutée en fonction d'une instruction de commande de connexion à Internet par ligne commutée de l'utilisateur et obtenir les données de réseau puis les envoyer audit serveur DHCP (202).
